Europäisches Patentamt

European Patent Office

Office européen des brevets

(11) Numéro de publication: **0 352 390**

**A1**

## (12) DEMANDE DE BREVET EUROPEEN

(21) Numéro de dépôt: **88401984.5**

(22) Date de dépôt: **29.07.88**

(51) Int. Cl.⁴: **E21B 21/06 , C02F 1/04**

(43) Date de publication de la demande:
**31.01.90 Bulletin 90/05**

(84) Etats contractants désignés:
**AT BE CH DE ES FR GB GR IT LI LU NL SE**

(71) Demandeur: **COMPAGNIE EUROPEENNE SPECIALISEE DANS LES TRAITEMENTS ANTIPOLLUTION REVALORISANT**
**Route des Vignots Zone Industrielle**
**F-59820 Gravelines(FR)**

(72) Inventeur: **Guillouart, Gérard**
**Vatry**
**F-51320 Sompuis(FR)**
Inventeur: **Thumelin, Daniel**
**Combles en Barrois**
**F-55000 Bar le Duc(FR)**

(74) Mandataire: **Loyer, Bertrand et al**
**Cabinet Pierre Loyer 77, rue Boissière**
**F-75116 Paris(FR)**

(54) **Dispositif pour le traitement des boues résiduelles industrielles.**

㊗ Dispositif pour le traitement des boues résiduelles industrielles par distillation, caractérisé par le fait qu'il comporte une trémie (6) de chargement des boues reliée à sa base à un four (2) incliné obliquement vers le haut, dans lequel les boues sont portées à la température voulue par un moyen de séchage (10), la trémie (6) et le four (2) étant parcourus de façon continue par un conveyeur (8) ; la trémie (6) le four (2) et le convoyeur (8) étant disposés de telle sorte que toute entrée d'air dans le four (2) soit interdite.

*Fig. 4*

## Dispositif pour le traitment des boues résiduelles industrielles

La présente invention a pour objet un dispositif pour le traitment de boues industrielles telles que boues de peinture ; rejets d'industrie de pâte à papier; boues résiduelles de fabrication de papiers peints ou encore de boues résiduelles de forage issues de la recherche et de l'extraction pétrolière et permettant de séparer lesdites boues en d'une part une matière sèche inerte déshydratée et/ou débarrassée de tout résidu pétrolier et en d'autre part les produits liquides qu'elles contiennent.

Les boues de peinture proviennent de travaux de décapage de peinture et comportent un mélange de matières solides (débris de peintures, produits de sablage) et de solvants. Les boues provenant de l'industrie du papier peint sont constituées par un mélange d'eau (40% environ), de papiers, de colorants, de vernis et débris de matières plastiques. Les boues provenant du désencrage des vieux papiers comportent environ 99% d'eau et 1% d'encre.

Le stockage de ces boues résiduelles provenant de l'industrie pose des problèmes considérables ; parce que, dans pratiquement tous les pays industrialisés ce stockage est soumis à des règlementations très contraignantes et très onéreuses, afin d'éviter la pollution de l'environnement.

Ainsi en France, par exemple, les déchets ne peuvent être stockés dans des décharges que s'ils sont pâteux, secs, tandis que les boues liquides doivent obligatoirement être détruites par incinération ou recyclées . Cela signifie que l'on est obligé d'y ajouter des produits combustibles et qu'on les fait brûler dans des usines d'incinération spéciales munies de moyens perfectionnés de filtration des fumées. Il en résulte qu'il n'y a en France qu'un nombre restreint d'usines d'incinération, ce qui signifie qu'il faut transporter sur des distances importantes les produits à détruire.

Ainsi, pour l'incinération de boues résiduelles de forage provenant des forages de mer du Nord et acheminées par barges à Dunkerque, il faut compter des frais de transport de l'ordre de 250 francs par tonne et d'incinération de 520 francs par tonne. Pour l'incinération de déchets de l'industrie de recyclage de vieux papiers, il faut compter environ 136 francs au m3 pour le transport 510 francs au m3 pour l'incinération qui est une opération assez absurde au point de vue économique puisqu'il s'agit d'incinérer un produit contenant 99 % d'eau.

La présente invention permet d'obtenir d'une part un produit sec que peut être stocké dans une décharge industrielle et d'autre part de récupérer les produits liquides qui, dans certains cas, peuvent être réutilisés. De plus, le matériel mis en oeuvre est très peu encombrant et peut-être facilement mis en place dans la cour d'une usine. L'invention constitue donc un progrès considérable par rapport aux méthodes actuellement employées.

Lors des forages à l'huile mis en oeuvre pour la recherche de pétrole, par exemple, on génère comme sous-produits des boues de forage chargées de résidus huileux, pouvant aller jusqu'à 95% de liquide.

Il n'existe pas pour l'instant d'utilisation de ces boues et on n'a jamais proposé de dispositif pour les valoriser.

En outre, leur nature les rend excessivement génératrices de pollution, tout du moins potentiellement.

Enfin, leur évacuation et leur stockage sont très onéreux car lesdites boues sont obtenues en grandes quantités et sont très pondéreuses.

Le besoin se fait donc sentir d'un dispositif permettant de valoriser lesdites boues et de les traiter pour éviter les inconvénients précités.

Grâce à la présente invention, on peut obtenir d'une part un matière sèche, d'une apparence voisine de celle du sable, que l'on peut stocker dans une décharge industrielle et d'autre part un produit combustible et de l'eau.

Conformément à l'invention, ce résultat est obtenu avec un dispositif pour le traitement des boues résiduelles et permettant de séparer lesdites boues en d'une part une matière sèche inerte déshydratée et débarrassée de tout résidu liquide et d'autre part les produits liquides qu'elles contiennent, caractérisé en ce qu'il comporte essentiellement un four de chauffage et de distillation continue, en absence totale d'oxygène, des boues à traiter, lesdites boues étant alimentées dans ledit four par une trémie et formant à ce niveau joint d'étanchéité pour éviter l'entrée simultanée d'oxygène.

De préférence, le dispositif comporte une trémie de chargement des boues communiquant à sa base avec une enceinte sensiblement rectiligne s'étendant obliquement vers le haut, cette enceinte étant munie de moyen de chauffage, ladite trémie et ladite enceinte étant parcourues par un convoyeur en boucle qui plonge dans la trémie et remonte le long de l'enceinte, la trémie étant munie de moyens de contôle de niveau pilotant l'alimentation en boues à traiter de façon à maintenir dans la trémie un niveau suffisamment élevé pour que l'air ne puisse jamais pénétrer dans l'enceinte chauffée.

De manière avantageuse, les boues seront reprises de la trémie et amenées vers le four par le biais d'une chaîne continue à palettes.

Selon un mode préféré de mise en oeuvre, le chauffage du four est réalisé par des groupes de résistances électriques, chacune étant munie d'un thermostat.

Pour éviter toute entrée parasite d'oxygène, qui entrainerait l'inflammation des vapeurs dégagées par le chauffage des boues, le corps du four sera réalisé par soudures totalement étanches.

Selon une caractéristique essentielle de l'invention, le chauffage des boues provoque une distillation en continu des liquides contenus dans les boues, les vapeurs ainsi obtenues étant captées et orientées vers un condenseur extérieur au four où elles sont ensuite récupérées.

En sortie de four, on obtient, en continu, une matière déshydratée inerte qui ne présente plus de risques de pollution et qui, totalement débarrassée de liquides, est considérablement moins pondéreuse et peut-être stockée dans une décharge industrielle.

Bien évidement, on peut mettre l'ensemble de la machine sous atmosphère neutre, par exemple de l'azote, mais il s'est avéré que cette précaution est totalement inutile, la disposition brevetée éliminant tout risque d'inflammation.

On comprendra mieux l'invention à l'aide de la description ci-après d'un mode de mise en oeuvre donné à titre d'exemple non limitatif, en référence aux dessins annexés dans lesquels :

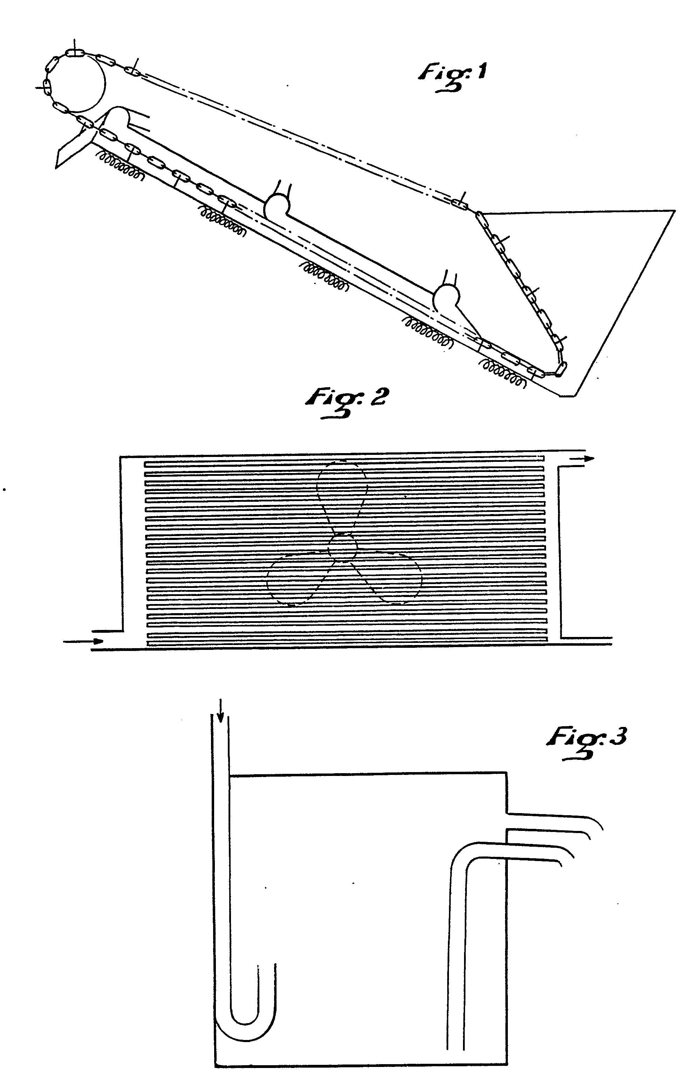

La figure 1 est une vue schématique en coupe longitudinale d'un dispositif conforme à l'invention ;

La figure 2 est une vue schématique en coupe longitudinale d'une condenseur des vapeurs sortant du four ;

La figure 3 est une vue schématique en coupe longitudinale d'une séparateur des liquides récupérés;

La figure 4 est une vue en élévation latérale d'une mode de réalisation de l'invention ;

La figure 5 est une vue en plan de la figure 4 ;

La figure 6 est une vue en bout de la figure 1.

Le dispositif généralement référencé 1 se compose essentiellement de :
- un four 2,
- un condenseur 3,
- un séparateur 4.

Le four comporte un corps 5, soudé étanche, muni d'une alimentation en matière à traiter, consistant en une trémie 6.

La masse à traiter 7 forme à ce niveau joint d'étanchéité et évite l'entrée d'oxygène.

Les boues sont reprises vers le four par une chaîne à palettes 8 qui se déplace en continu, entraînée par un moto-réducteur 9.

Sous la plaque de base du four, le long du cheminement de la chaîne 8, sont disposées des résistances 10, de préférence résistances électiques.

Le passage des boues au-dessus desdites résistances entraîne l'évaporation de produits liquides contenus dans la boue et donc en fait leur distillation en continu.

Les vapeurs sont reprises par des captages 11 que communiquent avec le condenseur.

L'absence totale d'oxygène est produite par l'étachéité du corps du four et le joint formé par le matière à traiter contenue dans la trémie. A la sortie, on obtient une matière sèche inerte totalement débarrassée de tout liquide, qui est évacuée par une goulotte 12.

On peut obtenir grâce à ce dispositif, et du fait de l'étanchéité, une température entre 100 et 500° C sans problème, alors que le point éclair du FOD est de 358° C.

En sortie des captages 11, les vapeurs sont amenées vers un condenseur 3 où elles sont refroidies par un dispositif classique de chicanes 12 et de ventilateur 13. Tout autre dispositif de condensation équivalent peut bien entendu être utilisé.

Il sort du condenseur 3 un condensat par un écoulement 14 conduisant au séparateur 4.

Les produits liquides obtenus sont essentiellement de l'eau et une phase huileuse, à savoir principalement du FOD. La séparation peut en être effectuée par exemple par simple décantation, ou analogue.

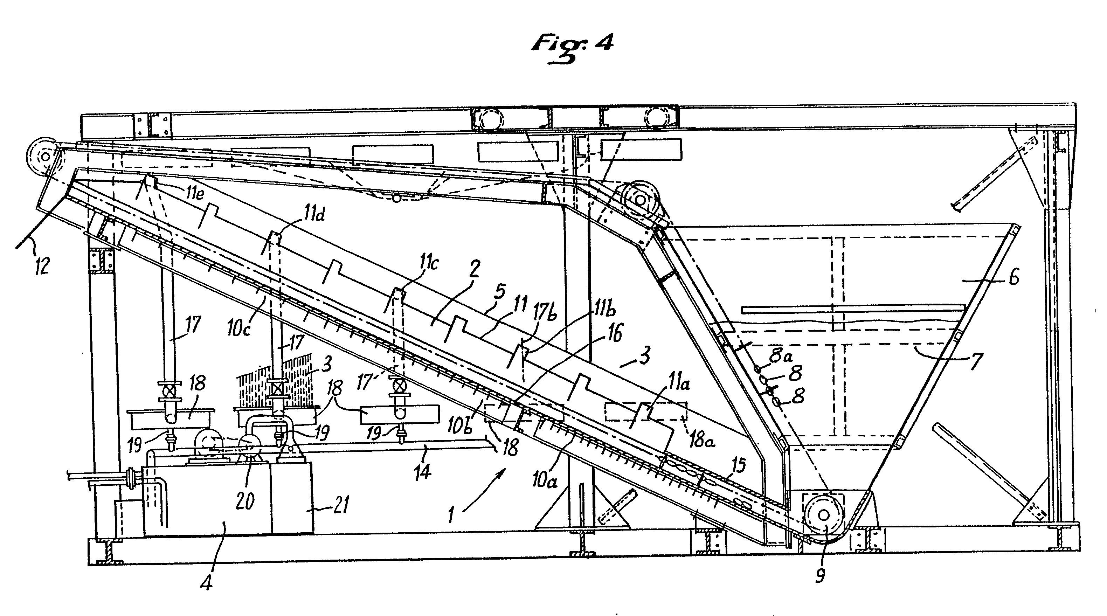

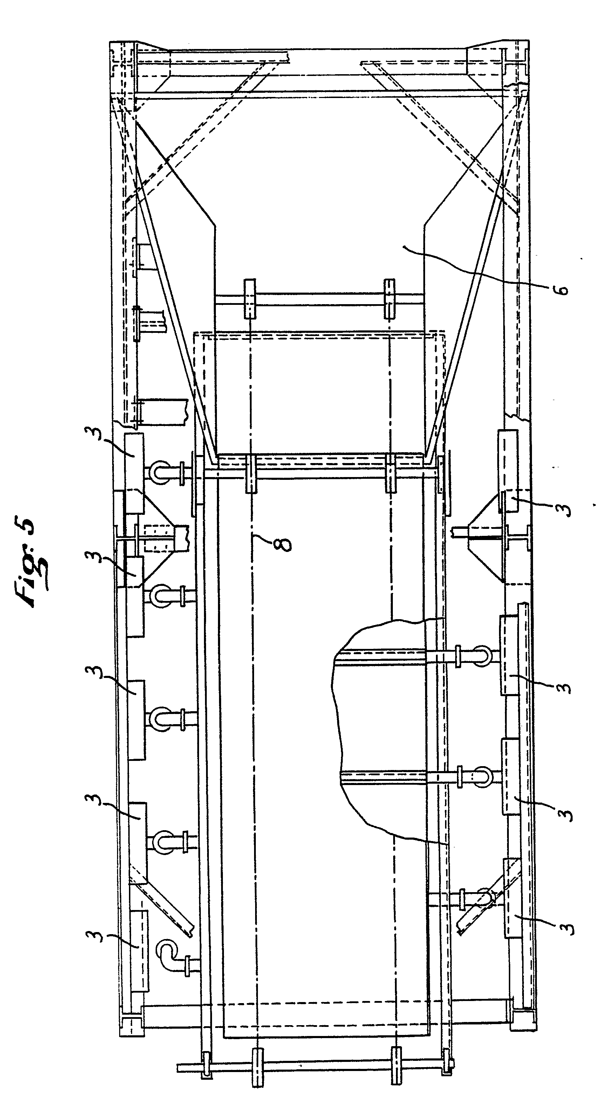

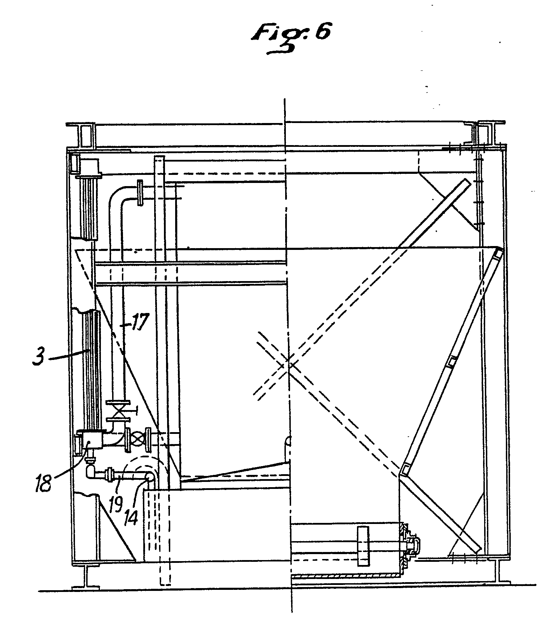

Les figures 4 à 6 représentent un exemple de réalisation de l'invention qui se présente sous la forme d'une machine ayant une longueur de 6 mètres et une largeur de 3 mètres : une telle machine peut donc être facilement transportable et elle peut également être facilement placée dans la cour d'une usine.

Comme on peut le voir, le convoyeur est constitué par une chaîne 8 à palettes 8a. A la base de la trémie 6 est disposé un conduit 15 qui a exactement la même section que les palettes 8a. Ceci a pour résultat que se trouve toujours dans ce conduit 15 un bouchon de matière que sépare l'enceinte du four 2 de la trémie 6 de sorte que l'air se trouvant au-dessus de la matière 7 ne peut pas pénétrer dans l'enceinte du four 2.

La base 16 du four 2 est constituée par un plan incliné en oblique vers le haut que s'élève jusqu'à un niveau supérieur au sommet de la trémie 6 : cela a pour but d'empêcher, si le produit est trop liquide et si la machine est accidentellement arrêtée que le produit ne se déverse par la goulotte 12.

Dans cet exemple de réalisation, on a disposé les résistances électiques en trois groupes 10a, 10b et 10c. Le groupe 10a comporte 75 résistances de 1.000Wsoit une puissance de 75 KW, le groupe 10b comporte 50 résistances de 1.000W soit une puissance de 50KW, le dernier groupe 10c comportant 24 résistances de 1.000W soit una puisance de 24KW. Il s'est en effet avéré qu'il était important d'obtenir une montée en température très rapide en bas du four 2 et qu'il ne restait plus ensuite qu'à maintenir cette température au fur et à mesure que le produit s'élève, ce qui requiert de moins en moins de puissance.

Le four 2 est recouvert d'un capotage que sert de collecteurs. La machine comporte neuf collecteurs 11 que débouchent dans des conduites 17, lesquelles aboutissent chacune à un caisson 18 situé au bas d'un ensemble de tubes verticaux qui constituent les condenseurs 3 proprement dits. Ces condenseurs 3 sont soumis à un courant d'air de refrodissement. Chaque condenseur 3 comporte à sa base une canalisation 19 qui débouche dans une canalisation collectrice 14 ; cette dernière aboutit à un bac de décantation 4, l'eau plus lourde que les solvants et hydrocarbure se déposant au fond du bac 4.

Comme on le voit sur la vue en plan (figure 4), il y a quatre condenseurs 3 d'un côté de la machine et cinq de l'autre.

La trémie 6 comporte un dispositif de contôle de niveau (non représenté) qui contrôle l'alimentation de la trémie 6 afin qu'elle soit toujours remplie au minimum sur la moitié de sa hauteur.

Il est en effet indispensable pour le bon fonctionnement de la machine 1 qu'il n'y ait jamais aucune arrivée d'air dans le four 2, car cela provoquerai une explosion lorsque les boues comportent des liquides inflammables comme c'est le cas pour les boues de forage.

Au-dessus du bac de décantation 4 est placée une pompe à vide 20 qui aspire les vapeurs venant des condenseurs et les insuffle dans un filtre 21 que peut, comme cela est connu être consitué d'un matelas constamment arrosé d'eau, le caisson dans lequel est placé le matelas communiquant avec le bac du décanteur 4.

La pompe 20 a pour effet de créer un léger vide, de sorte que l'enceinte du four 2 est elle-même en légère dépression. Il faut impérativement éviter que de l'air entre de façon importante dans le four 2 par la goulotte 12 et pour cela, on dispose à l'extrémité du four 2 un manomètre (non représenté) qui pilote la pompe 20 de façon que la dépression à l'extrémité du four 2 soit de l'ordre de 1 millibar.

- EXEMPLE I -

On a employé cette machine pour traiter des boues de forage à l'huile. Dans ce cas, on a réglé les résistances 10 de façon à obtenir une température de 180° C dans le four. Cette température est supérieure à la température d'auto-allumage de cette huile en présence d'air, mais l'enceinte 2 étant complètement isolée de l'air (sauf à son extrémité et dans d'infimes quantités), l'huile s'est évaporée et a été récupérée.

On a ainsi traité en 24 heures 11 m3 de boues de forage en provenance de mer du Nord, ce qui a permis de récupérer 2.700 litres de FOD, 1.200 litres d'eau et environ 7 m3 de matière sèche. L'électricité nécessaire était fournie par deux groupes électogènes de 80 kwA dont la consommation était de 15 litres de fioule à l'heure. L'un de ces groupes a fonctionné de façon ininterrompue pendant les 24 heures ce qui représente une consommation de 360 litres ; tandis qui le deuxième n'a fonctionné que de façon intermittente, d'abord au début de l'opération pour obtenir une montée rapide en température et ensuite uniquement pour maintenir la température désirée soit un fonctionnement total d'environ 8 heures et donc une consommation de 120 litres. On a pu constater que le FOD récupéré pouvait sans difficulté faire fonctionner lesdits groupes électrogènes : on a donc récupéré 2.700 - 480 = 2.220 litres de carburant tout en ayant dépollué 11 m3 d'un produit dont le stockage en l'état pose de très gros problèmes.

- EXEMPLE II -

On a également employé cette machine pour traiter des boues provenant d'une installation de désencrage d'une installation de recyclage de vieux papiers. Cette boue était extrêmement liquide puisque contenant 99% d'eau et 1% d'encre. Dans un tel cas, il n'est pas possible d'obtenir un bon entraînement par les palettes 8a. On a donc été amené à diminuer l'inclinaison du four et donc à diminuer la hauteur des capteurs afin d'éviter que le liquide ne se vide tout seul ; de plus on a épaissi la boue en question en y ajoutant un mélange de terre végétale et de bentonite pour obtenir une matière pâteuse. On a chauffé cette matière à 120° C et on a obtenu en 12 un produit sec chargé d'encre (encre ou bentonite + encre) que l'on a recyclé en l'utilisant pour épaissir la boue liquide tout en la préchauffant. Il est bien évident qu'au fur et à mesure qu'on le recycle, ce produit devient de plus en plus chargé d'encre et il faut alors l'éliminer. Mais ce produit chargé d'encre est complètement deshydraté et peut donc être mis dans une décharge alors cela est interdit pour les boues liquides au contenant des liquides.

Pour avoir un fonctionnement satisfaisant de la machine, il est préférable que la matière mette environ 1 heure pour la traverser. De préférence, pour obtenir une vitesse aussi lente au lieu du réducteur 9 on emploie une transmission comportant une roue à rochet animée par un vérin électrique, ce qui donne un avancement pas à pas dont la vitesse est facilement réglable.

Selon une variante de réalisation, non représentée, on a modifié la goulotte 12 de façon qu'elle soit dirigée vers le haut et provoque un étranglement de façon analogue à un goulot de bouteille. Il en résulte qu'il se forme à l'extrémité supérieure du four un véritable bouchon de matières que sont déversées par débordement par l'action des palettes : cela empêche tout entrée d'air intempestive ainsi que toute sortie de vapeurs par l'extrémité du four.

**Revendications**

1. Dispositif pour le traitement des boues résiduelles industrielles par distillation, caractérisé par le fait qu'il comporte une trémie (6) de chargement des boues reliée à sa base à un four (2) incliné obliquement vers le haut, dans lequel les boues sont portées à la température voulue par un moyen de séchage (10), la trémie (6) et le four (2) étant parcourus de façon continue par un convoyeur (8) ; la trémie (6) le four (2) et le convoyeur (8) étant disposés de telle sorte que toute entrée d'air dans le four (2) soit interdite.

2. Dispositif selon la revendication 1, dans lequel le convoyeur est une chaîne (8) à palettes (8a) qui traverse un conduit (15) disposé entre la base de la trémie (6) et cell du four (2), ce conduit (15) ayant même section que cell des palettes (8a) de façon à former un bouchon de matière.

3. Dispositif selon la revendication 2, dans lequel la trémie (6) comporte un dispositif de contrôle de niveau de façon que ladite trémie soit toujours pleine sur au moins environ la moitié de sa hauteur.

4. Dispositif selon l'une quelconque des revendications 1 à 3, dans lequel le four (2) s'étend obliquement vers le haut jusqu'à un niveau situé légèrement plus haut que le sommet de la trémie.

5. Dispositif Selon l'une quelconque des revendications précédentes, dans lequel le four (2) comporte un capotage (11) relié de place en place à des canalisations d'évacuation des vapeurs (17) aboutissant à des condenseurs (3) s'écoulant dans un bac à décantation (4).

6. Dispositif selon la revendication 5, dans lequel les vapeurs du bac à décantation sont évacuées vers un filtre (21) par une pompe à vide (20) créant une dépression dans toute l'installation, le four (2) comportant au voisinage de sa sortie un manomètre pilotant la pompe (20) de façon à maintenir une dépression de l'ordre de 1 millibar.

7. Dispositif selon l'une quelconque des revendications précédentes, dans lequel le four (2) est à chauffage dégressif.

8. Dispositif selon la revendication 5, dans lequel le capotage entourant le four comporte un orifice de sortie dirigé vers le haut et constituant un étranglement de façon à obturer l'orifice du four par un bouchon de matières que sont déversées par débordement afin d'empêcher à la fois toute sortie intempestive de vapeurs et toute entrée d'air.

Fig: 1

Fig: 2

Fig: 3

*Fig. 4*

*Fig. 5*

*Fig: 6*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 184 411  (ATLANTIC RICHFIELD CO.)<br>* Résumé; revendication 1 *<br>--- | 1-8 | E 21 B   21/06<br>C 02 F    1/04 |
| A | US-A-4 649 655  (WITTEN)<br>* Résumé; revendication 1; colonne 2, lignes 3-29 *<br>--- | 1-8 | |
| A | US-A-4 515 607  (WOLDE-MICHAEL)<br>* Résumé; figures *<br>--- | 1 | |
| A | US-A-4 475 986  (SMITH)<br>* Résumé; colonne 1, lignes 33-65 *<br>--- | 1 | |
| A | EP-A-0 171 577  (DEGUSSA AG)<br>* Résumé; revendication 1 *<br>--- | 2 | |
| A | EP-A-0 003 216  (SAARBERG-FERNWÄRME GmbH)<br>* En entier *<br>--- | 1 | |
| E | FR-A-2 611 878  (THUMELIN)<br>* En entier *<br>----- | 1-8 | |

**DOMAINES TECHNIQUES RECHERCHES (Int. Cl.4)**

E 21 B
F 27 B
F 27 D
C 02 F

**Le présent rapport a été établi pour toutes les revendications**

| Lieu de la recherche | Date d'achèvement de la recherche | Examinateur |
|---|---|---|
| LA HAYE | 21-03-1989 | HEDEMANN,G.A. |

EPO FORM 1503 03.82 (P0402)